# EUROPEAN PATENT SPECIFICATION

(11) **EP 0 472 267 B1**
(45) Date of publication and mention of the grant of the patent: **02.05.1997**
(21) Application number: 91304991.2
(22) Date of filing: 03.06.1991
(51) Int. Cl.: H02M 7/17, H02M 7/08

(54) **Optimized, 18-pulse type AC/DC, or DC/AC, converter system**
Optimiertes 18-Puls AC/DC, oder DC/AC, Konvertersystem
Système de convertisseur optimisé du type à 18 impulsions AC/DC, ou DC/AC

(30) Priority: 17.08.1990 US 569105; 22.03.1991 US 674815
(43) Date of publication of application: 26.02.1992
(73) Proprietor: EATON CORPORATION, Cleveland Ohio 44114 (US)
(72) Inventor: Paice, Derek Albert, Palm Harbor, FL 33563 (US)
(74) Representative: van Berlyn, Ronald Gilbert

(56) References cited:
- US-A- 4 112 403
- US-A- 4 876 634
- EPE'89, 3rd European Conference on Power Electronics and Applications, vol. 3, Aachen, DE, 9-12 October 1989, pp. 1131-1136, published by EPE'89-Secretariat, Düsseldorf, DE, Ed. W. LEONHARD et al.; C. NIERMANN : "New rectifier circuits with low mains pollution and additional low cost inverter for energy recovery"

## Description

The invention relates to static AC-to-DC converters, such as can be used for AC or DC motors.

One main problem with static AC-to-DC converters, such as can be used for AC or DC motors, is the generation of harmonics on the AC lines, which are caused by the rectification process. Another problem is cost. The use of transformers and filtering inductances, the rating involved, all require a minimization of components, windings and rectifying devices without losing the benefits of the overall system.

It has been shown in U.S. Patent No. 4,876,634 how a multiphase AC/DC converter can be designed with a single transformer having successive tappings drawn from a polygonal succession of long and short windings, the difference between outputted currents being derived from the tappings.

The article "New rectifier circuit with low mains pollution and additional low cost inverter for energy recovery", EPE'89, 3rd European conference on power electronics and application, Aachen 9-12 October 1989, published by EPE'89 Secretariat Postfach 1139, D-4000 Düsseldorf, Germany, pages 1131-1136, discloses a 18-pulse rectifier which corresponds to the preamble of claim 1. The distorsion content of the line currents is improved by connecting two line-side interphase transformer (LIT). The LIT generate two three-phase current systems with a phase angle difference of 40°.

The invention as disclosed in the claims relates to an 18-pulse AC-to-DC converter arrangement using special autotransformer connections with an appropriate phase shift and a selected conduction angle in order to eliminate the need for interphase transformers. This arrangement, when combined with appropriate AC line reactances, leads to the generation of input line harmonic currents in the AC lines which are easily reduced to less than 1½% of the fundamental current, a substantial improvement over the prior art. Where the harmonic currents generated by an AC-to-DC converter must be reduced to values lower than those attainable with a 12-pulse arrangement, this particular 18-pulse design becomes desirable. This approach rests upon the observation that the idealized harmonic currents have frequencies of (18 k ±1) with amplitudes of 1/(18 k ±1). Prior art 18-pulse techniques have encountered practical connection difficulties because of the large rating of associated phase-shifting and interphase transformers.

Three-phase rectifier bridge arrangements typically involve a single 3-pulse converter group combining three SCR devices, or 3 diodes, with a 120° period of current conduction. With this approach, however, there will be a need for an interphase transformer and for providing a neutral reference point between the bridges. The present invention no longer requires an interphase transformer, nor a neutral reference point between the rectifier bridges.

A more complete understanding of the invention may be had from the following description of a preferred embodiment, given by way of example and to be read in conjunction with the accompanying drawings wherein:
Figure 1 shows a 3-pulse converter system formed with a single rectifier group with a neutral line return for the three AC phases, in an unsmoothed DC current operation;
Figure 2 shows a system combining two 3-pulse converters formed with two groups of rectifiers and a neutral line return for the three AC phases, in an unsmoothed DC current operation;
Figure 3 shows a system using two 3-pulse rectifier groups with a zig-zag interphase transformer providing a neutral point other than the supply source;
Figure 4, which is prior art, shows the use of three 6-pulse rectifier bridges staggered at 20 degrees phase shift and with interphase transformers;
Figure 5, which is prior art as taken from U.S. Patent No. 4,876,634, shows an 18-pulse converter using a dual phase shift autotransformer, also combined with three 6-pulse rectifier bridges staggered at 20 degrees and using interphase transformers;
Figure 6 is a polygonal representation of the dual shift autotransformer of Figure 5;
Figure 7 illustrates the 18-pulse converter in an embodiment using three parallel 6-pulse rectifier bridges, two of them under two separate transformers at + and -40 degrees, respectively;
Figure 8 illustrates an embodiment of the invention wherein a single transformer is coupled to the three parallel 6-pulse rectifier bridges for generating pulses under ±40 degrees to a corresponding one of two of the bridges and a 0-degree phase shift to the third bridge;
Figures 9 and 10 show how, in the absence of a interphase transformer, smoothing inductances are associated with the three rectifier bridges of Figures 7 and 8 for high frequency noise elimination;
Figure 11 is a diagram matching Figure 7 to show the two delta-transformers shifted at + and -40 degrees relative to a common and central delta winding;
Figure 12 is a diagram matching Figure 8 to show a single autotransformer of the differential delta type, as used according to the embodiment of the 18-pulse converter system of the present invention;
Figure 13 is a representation of the three parallel 6-pulse rectifier bridges associated Figures 11 and 12;
Figure 14 illustrates the winding distribution according to the embodiment of Figure 12;
Figures 15 and 16 illustrate with curves the input current and voltage waveforms obtained with two different values of the inductance components used in the rectifier bridges of Figure 13.
Figures 17, 18, and 19 are illustrating modifications to the winding distribution shown in Figure 14 according to three respective embodiments of the invention.

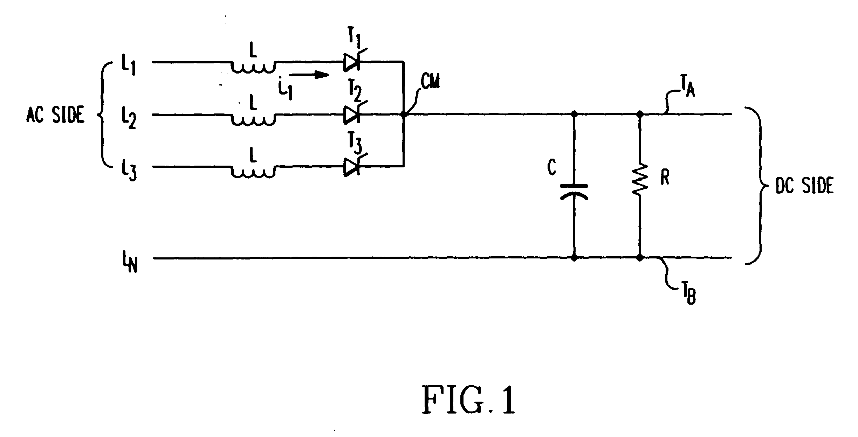

Referring to Figure 1, a basic 3-phase rectifier group is shown which, because it lacks smoothing inductors on the DC side, allows a significant ripple amount on the DC load. This group includes three SCR devices T1, T2, T3 connected to the AC power supply lines L1, L2, L3 through inductances L. Their common junction point CM is connected to the positive DC terminal TA. The neutral return line is TN derived from the DC terminal TB. Between the two DC terminals are a capacitor C and a resistor R, as generally known. The system operates to convert AC power into DC power or, conversely, DC power into AC power, depending upon where the supply and the load is. The line currents are shown applied through the inductance L so as to limit the rate of change of current and provide some reduction in the line current harmonics. The AC currents, such as i1 on Figure 1, contain a DC component and a significant amount of third harmonic current. Although this is a workable circuit, it is rarely used for higher power applications because of the distortion and the unfavorable loading exerted upon the supply.

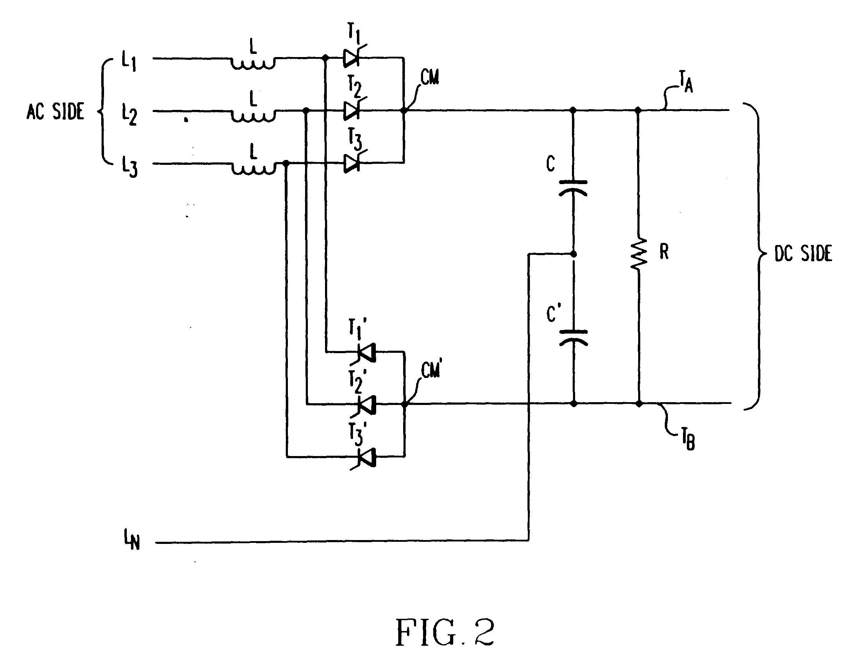

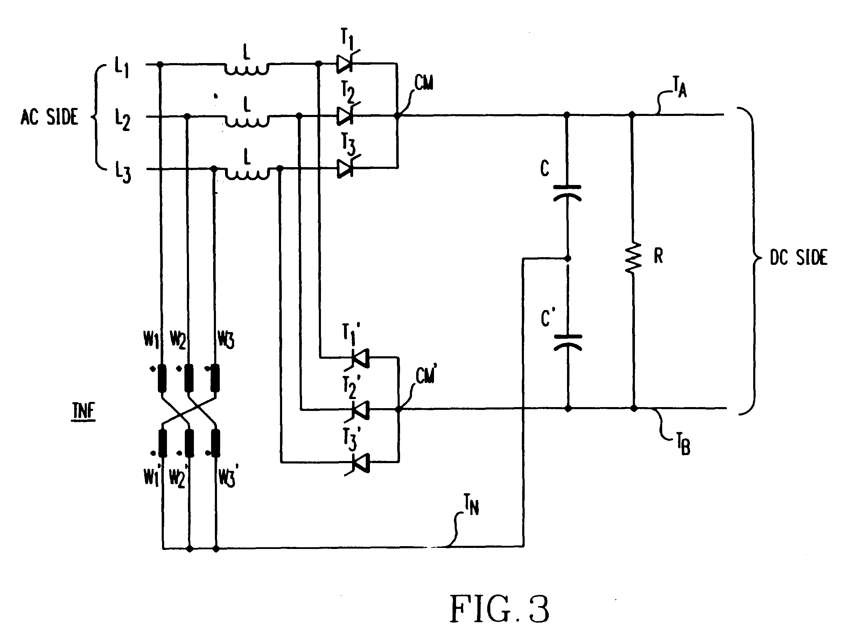

Figure 2 shows two such "building blocks", T1, T2, T3, and T'1, T'2, T'3 with their common junction points CM, CM', respectively, and a common neutral point N (located between two capacitors C and C') for the return neutral line LN. This common neutral connection is used so as to eliminate the DC component in the supply. Nevertheless, there remains a large third harmonic component of current drawn from the AC source. By providing a neutral point N which does not return to the AC power supply, the third harmonic no longer circulates through the AC source. This is shown on Figure 3 through the provision of a zig-zag interphase transformer TNF with primary windings W1, W2, W3 associated with the three AC lines L1, L2, L3 and criss-crossed secondary windings W'1, W'2 and W'3 converging, via line TN, with the neutral N located at the center point between capacitors C and C'. However, a significant third harmonic component of current still flows through the center point N.

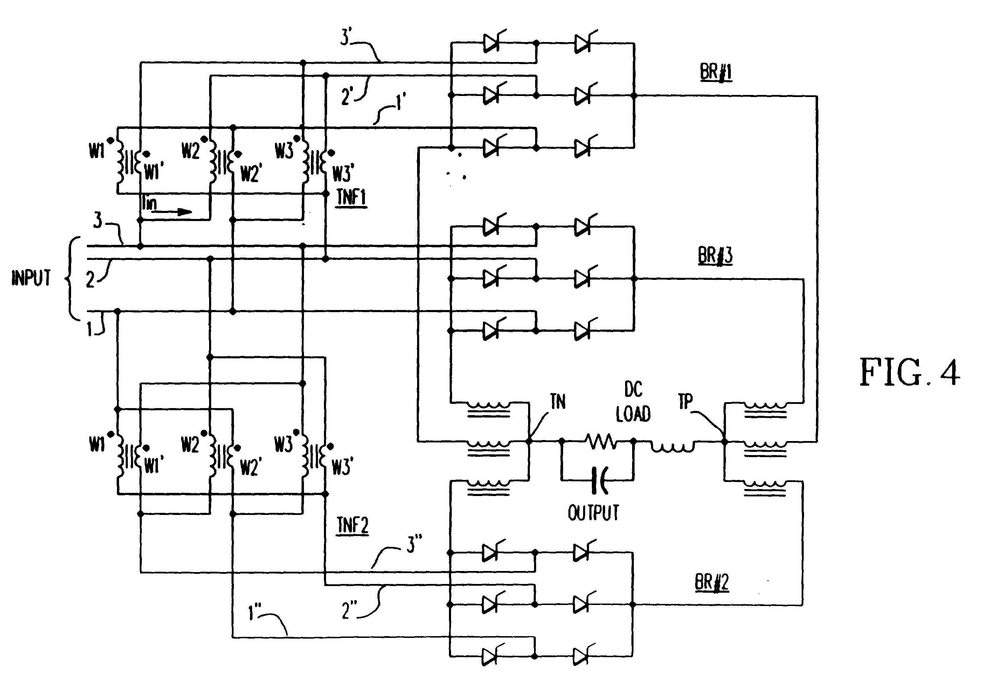

Another solution, shown by Figure 4, consists in using three "building blocks", instead of the two shown in Figure 3. Figure 4 shows three 6-pulse rectifier bridges BR#1, BR#2 and BR#3, as disclosed in U.S. Patent No. 4,876,634. The rectifiers are controlled under 120-degree current conduction, and the bridges are staggered by a 20-degree phase shift regarding the incoming power supply voltages. They are interconnected at both ends with an interphase transformer--one with the positive DC terminal TP, the other with the negative DC terminal TN--as shown in Figure 4. This helps provide a common neutral point like with the approach of Figure 3.

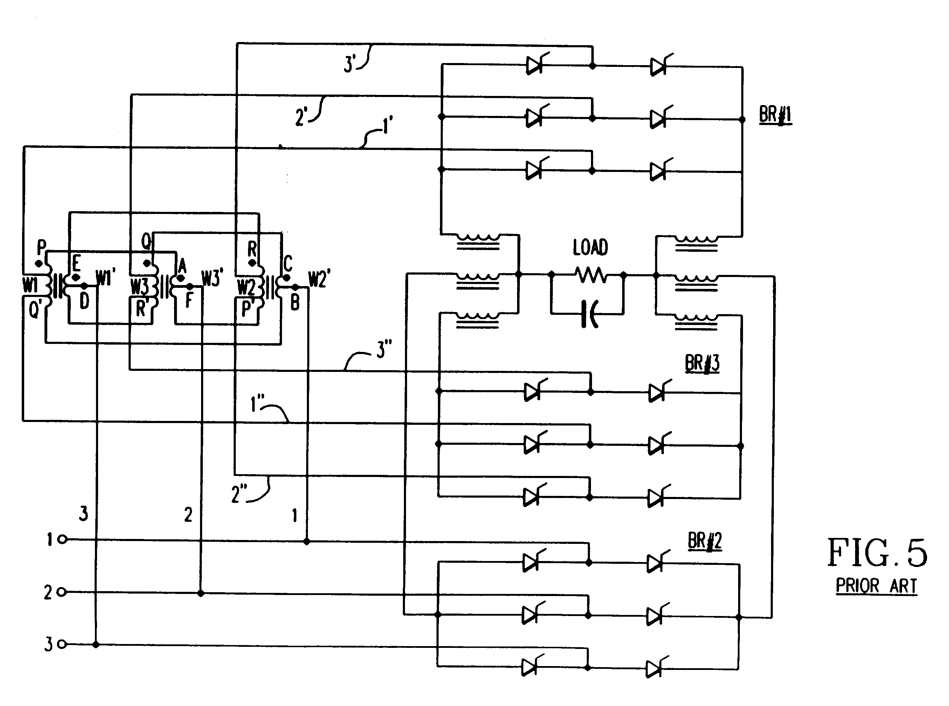

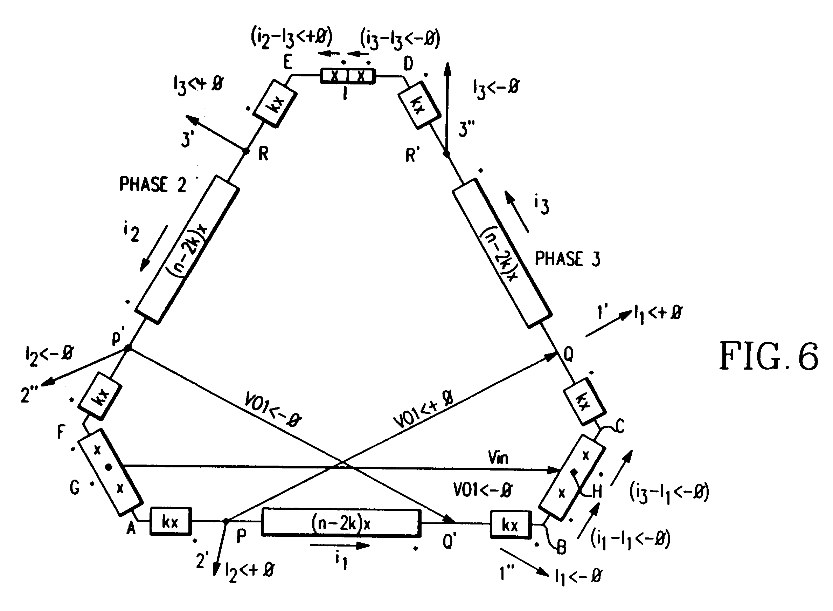

Figure 5 shows as prior art an 18-pulse converter verter disclosed in U.S. Patent No 4,876,634. This operates with a polygonal transformer placing each of the lines 1, 2, 3 (for bridge BR #3), 1', 2', 3' (for bridge BR #2) and 1'', 2'', 3'' (for bridge BR #1) at a relative phase shift of 20 degrees, and the SCR devices are controlled for 120 degrees of conduction. This polygonal solution is more generally shown in Figure 6 with the algebraic sum indicated with the outgoing current (I1, I2, I3) at each tapping (P, Q, R, for bridge BR #1 and P', Q', R' for bridge BR #2), the corresponding phase shift being φ (as given by the windings), a positive voltage phase shift of +φ for PQ, and a negative voltage phase shift of -φ relative for GH, where a pair of AC lines is connected. However, as shown in Figure 5, like in Figure 4, interphase transformers are used in order to establish neutral points on either side of the DC terminals. This was the approach with a + and -φ degrees phase shift between two bridges and a 120-degree conduction of current on the rectifiers.

In contrast, with the present invention, the three 6-pulse rectifier bridges are directly connected in parallel across the two DC terminals. Two of the bridges are now under opposite + and -40 degrees phase shift, the third being centrally disposed with zero degree--thus, in phase with the AC lines.

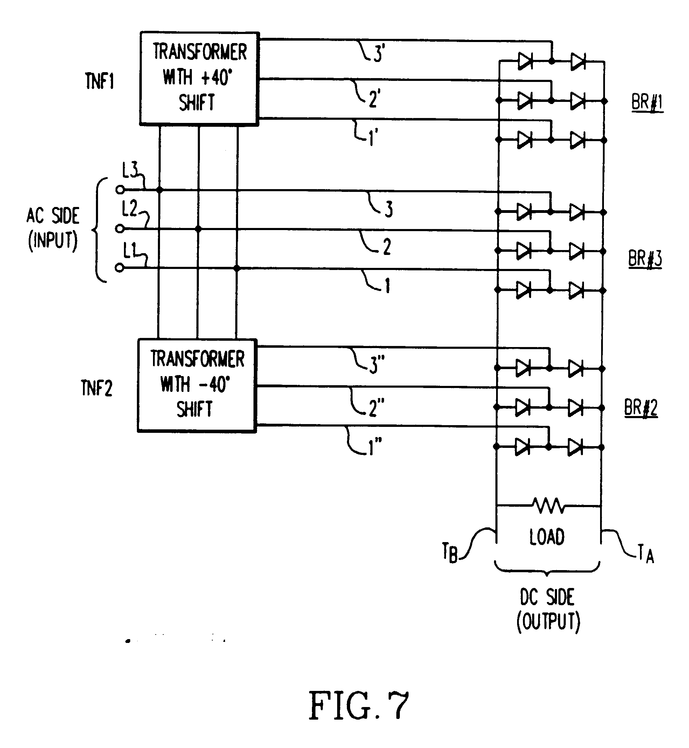

Referring to Figure 7, two transformers TNF1 and TNF2--one at -40° phase shift, the other at +40° phase shift relative to the AC voltage of the AC lines L1, L2, L3--are coupled to respective rectifier bridges BR #1 and BR #2 by corresponding lines 1', 2', 3' and 1'', 2'', 3'', respectively. AC lines L1, L2, L3 are directly applied by lines 1, 2, 3 to a third rectifier bridge BR #3. Thus, like in Figure 3, the AC side is with lines L1, L2, L3, whereas, the DC side is between terminals TA and TB at the common terminals of the bridges.

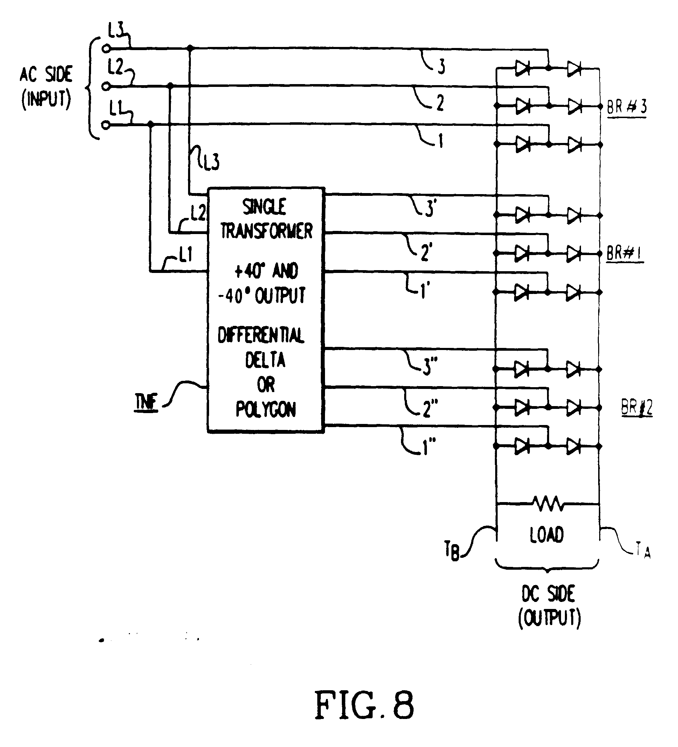

Referring to Figure 8, an embodiment is shown with a single transformer TNF interposed between the three bridges BR #1, BR #2, and BR #3 on one side and lines L1, L2, L3, on the other side. Again, transformer TNF will provide + and -40° phase shifts between lines 1', 2', 3' to bridge BR #1 and lines 1'', 2'', 3'' to bridge BR #2 relative to a 0-degree phase shift for lines 1, 2, 3, from L1, L2, L3.

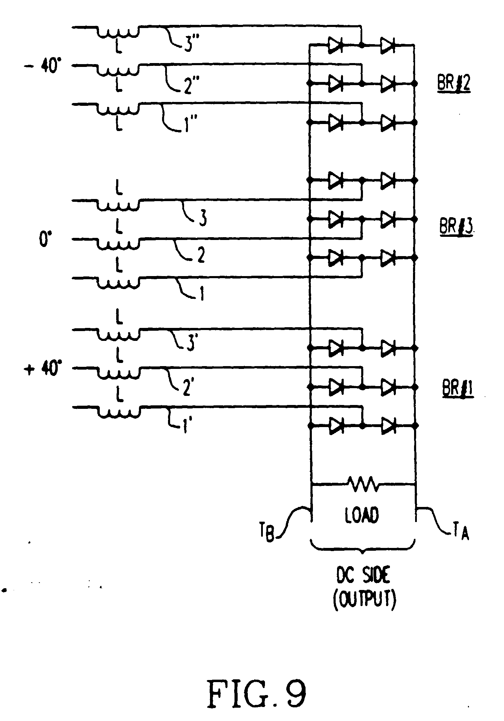

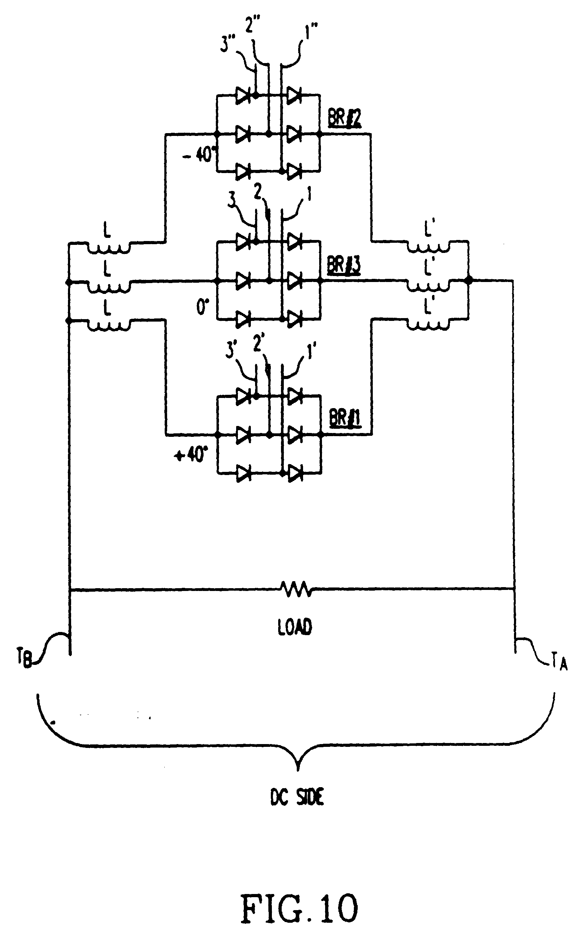

As shown in Figures 7 and 8, there is no interphase transformer needed on the rectifier bridge side and no neutral point to be sought for. As a result, each set of rectifier bridge has in common the same individual pairs of serially-connected rectifiers across the two DC terminals and with their midpoint connected to the incoming (or outgoing) AC line. All that is required is a filtering inductance L in order to eliminate any high frequency component on lines 1, 2, 3; 1', 2', 3'; and 1'', 2'', 3'' of the rectifier bridges. In Figure 9, each line (1, 2, 3; 1', 2', 3'; 1'', 2'', 3'') carries an inductance L. In Figure 10, two inductances L and L' are inserted on each side of the corresponding bridge and line between terminals TA and TB.

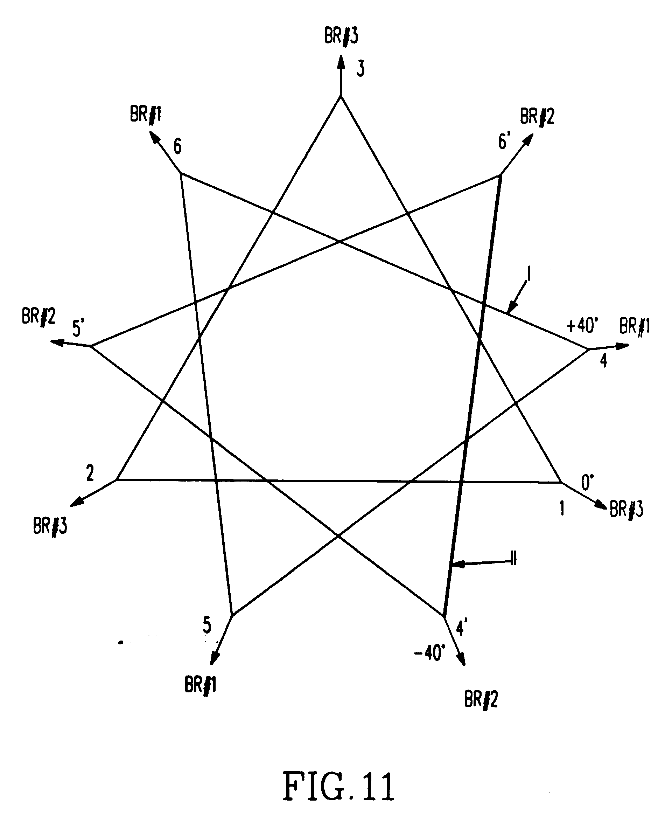

Figure 11 shows the voltage vector sets of two transformers (I at +40° phase shift, and II at -40° phase shift), the primary set being shown as a delta diagram at 0 degrees phase shift, thus, in between. Points 1, 2, 3 go to bridge BR #3; points 4', 5', 6' go to bridge BR #2; and points 4, 5, 6 go to bridge BR #1.

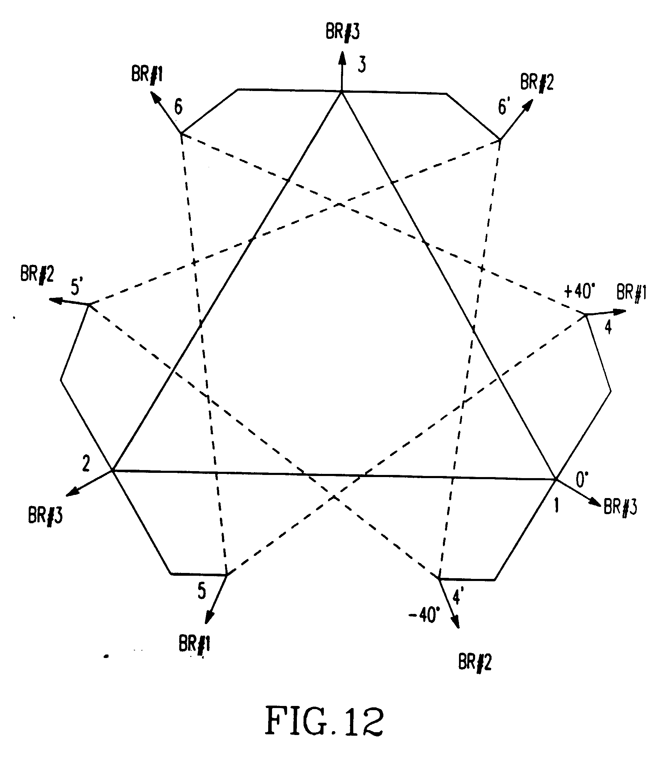

Figure 12 shows the voltage vectors associated with a single transformer approach in the case of a differential delta, which relates to an embodiment of the invention. A 18-pulse converter system is shown having the optimized design for such a system. About the central delta 1, 2, 3 are placed, with a single transformer: points 4, 5, 6 at a phase shift of +40° and going to bridge BR #1; tappings 4', 5', 6' at a phase shift of -40° and going to bridge BR #2.

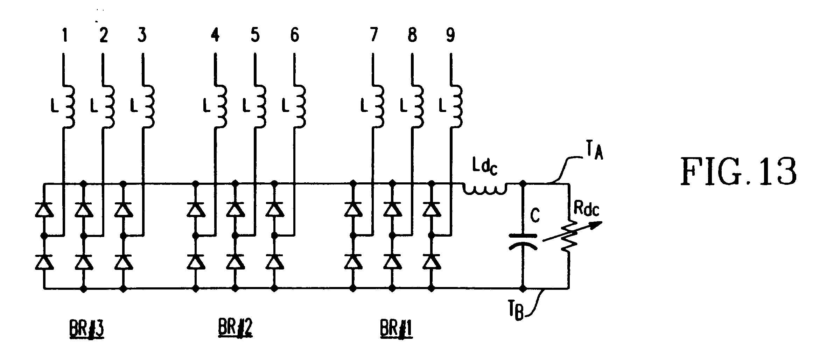

Figure 13 shows the three bridges--BR #1, BR #2, BR #3-- in parallel between the two DC terminals TA, TB and connected individually to the corresponding nine AC lines (1 to 9). There is no interphase transformer. In order to reduce the high frequency current, on each line has been interposed an inductor L, and on the DC side an inductor Ldc before the capacitor C, and a variable resistor Rdc which characterize the DC load.

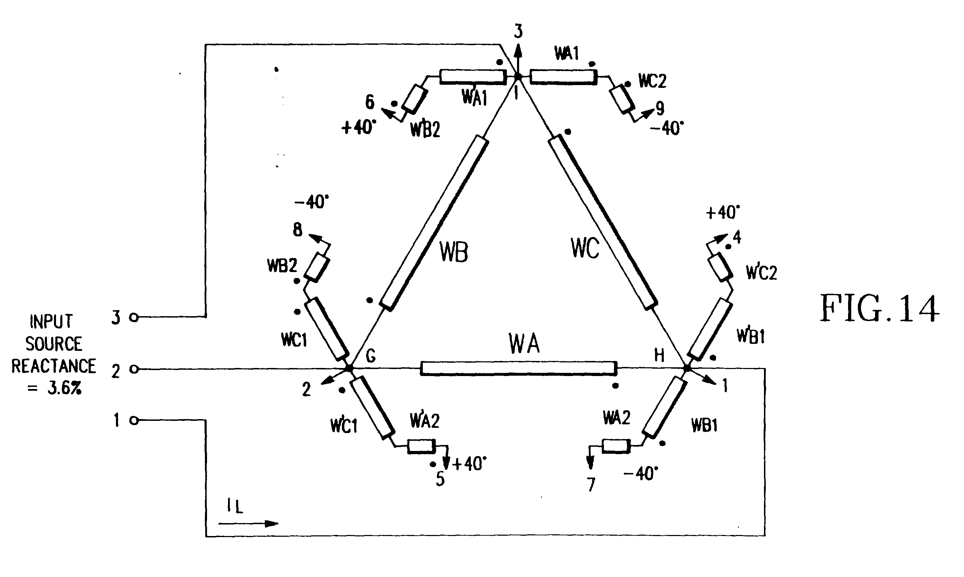

Figure 14 is the differential delta transformer design matching the general diagram of Figure 12. WA, WB, WC, disposed about AC lines tappings I, G, H, are the central windings; in fact, the primary windings if the input comes from the AC side. The secondary windings for one of the two bridges, BR #1 and BR #2, are for +40° phase shift: W'A1 and W'B2 associated with tapping 3 (apex I) opposite to winding WA; W'C1 and W'A2 associated with tapping 2 (apex G) opposite to winding WC; and W'B1 and W'C2 for tapping 1 (apex H) opposite to winding WB. W'B2, W'A2 and W'C2 are coupled with windings WB, WA and WC, respectively, while windings W'A1, W'B1 and W'C1 are coupled to windings WA, WB, WC, respectively. The same can be said for the -40° phase shift pairs of windings WA1 and WC2 (apex I), WC1 and WB2 (apex G), WB1 and WA2 (apex H). The sizes of the windings are, typically, 58 turns for WA, WB or WC; 17 turns for WA1, W'A1, WB1, W'B1, WC1 and W'C1; 9 turns for WA2, W'A2, WB2, W'B2, WC2, W'C2. Another possible set of windings would be 65, 19 and 10 for the respective number of turns for the main, intermediate, and smallest windings.

To explain the performance of the + and -40° phase shift relative to the central triangle 1, 2, 3, it is noted that the third harmonic has a zero sequence, while no phase shift does occur as it passes through the transformer. Thus, if the third harmonic current from the converter directly connected to the source is assumed to be at zero degrees phase, the leading (+40°) converter will have third harmonic current at 3 x 40°, i.e. 120°, whereas the lag converter (-40°) will have third harmonic current at 3 X -40°, i.e. -120°. Thus, the 3-phase set of third harmonic currents cancels and there is no resultant third harmonic drawn from the source. Similarly, the negative and positive sequence sets of 5, 7, 11, 13 harmonics are phase-shifted as they pass through the transformer. The negative sequence shifts through an angle opposite to that of the positive sequence. For example, considering the fifth harmonic in the +40° transformer, the phase shift, with respect to the source, is (5 X 40°) +40°, i.e. 240°. Likewise, in the -40° shift transformer, it is (5 X -40) -40°, i.e. -240°. Thus, the three sets of fifth harmonic currents sum to zero from the source. Similar reasoning leads to observe that there is also an elimination of the 7, 11, 13 harmonics.

Considering the central 6-pulse rectifier bridge, a 30-pulse converter system can be designed under the same principle by adding four instead of two symmetrically shifted bridges in conjunction with a bridge having no phase shift. In such case, two will be at + and -48 degrees phase shift, two will be at + and -24 degrees phase shift, and one will be at zero degree phase shift. One can go higher by using 7 bridges, instead of 5; namely, 1 + 6-pulse bridges.

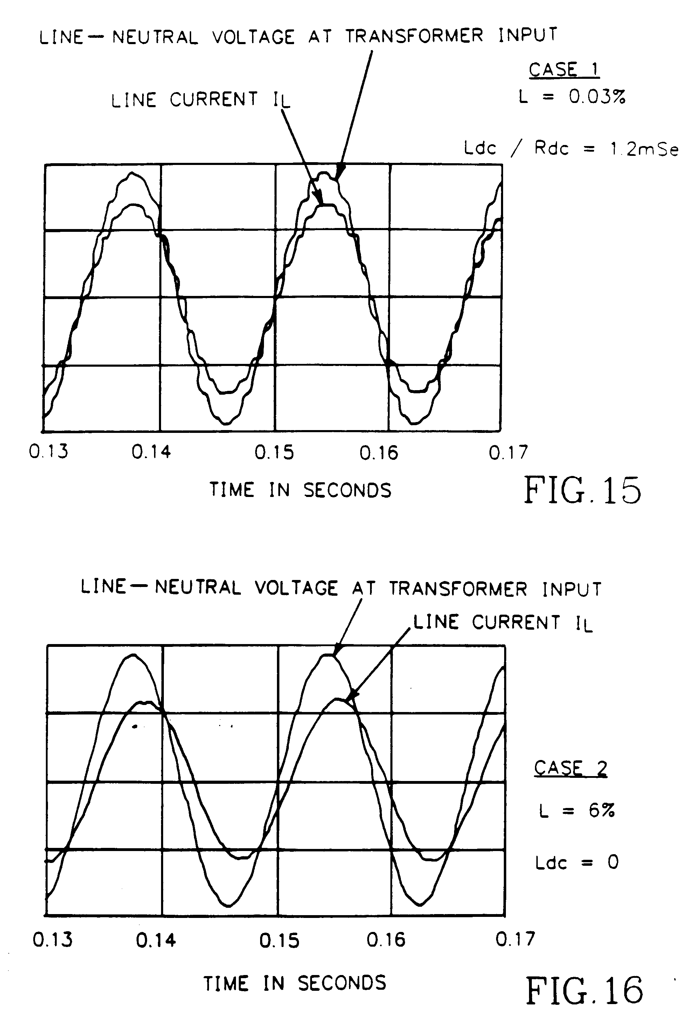

Figures 15 and 16 represent the line-to-neutral voltage at the transformer output (V) and the flowing current I_{L} for (1) L = 0.003% and Ldc/Rdc = 1.2ms; and (2) Ldc = 0, both in the case of Figure 13.

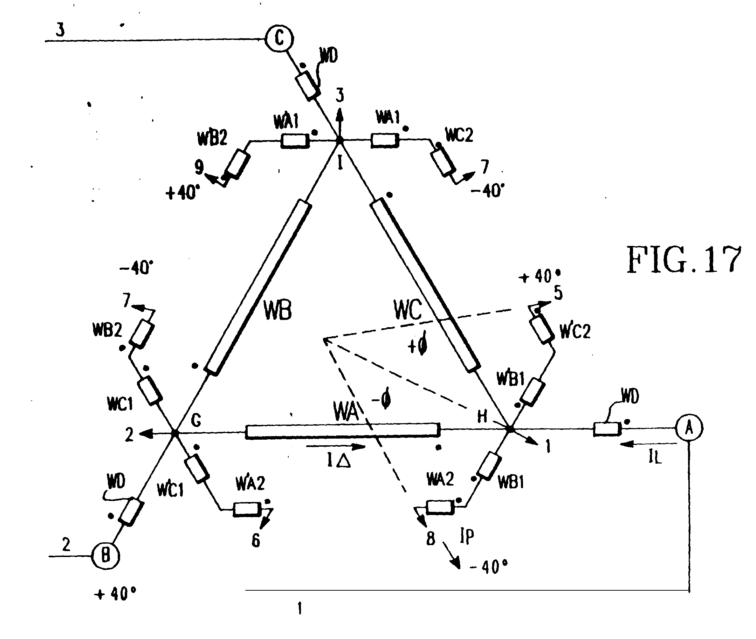

Figure 17 is like Figure 14, but modified by the adjunction of a winding WD placed as an extension of each side (WA, WB, or WC) of the triangle GHI. The three AC lines 1, 2, 3 are connected to one end of the added windings WD, respectively, while the other end thereof is connected to an associated apex of the triangle. The effect is to reduce the DC output to the extent of the ampere-turns of the added winding WD.

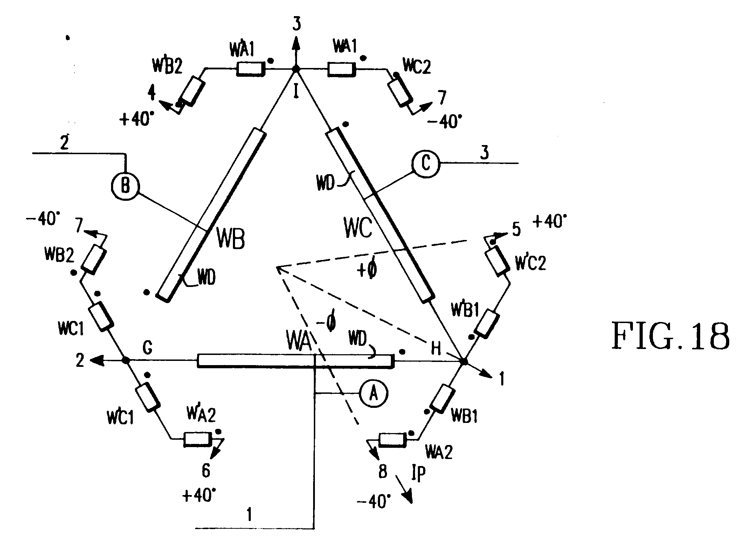

Figure 18 is like Figure 14, but instead of decreasing the DC output, a winding WD is added in such a way that the DC output is increased. This effect, the AC lines 1, 2, 3, instead of being connected directly to the respective apices of the triangle GHI, they are connected to a tapping of the main delta windings. Instead of a full delta winding WA, WB or WC, as in Figure 14, such winding is merely a fraction of the main triangle winding, and the complementary fraction on the triangle is the winding WD of Figure 17, used now as a subtrahend.

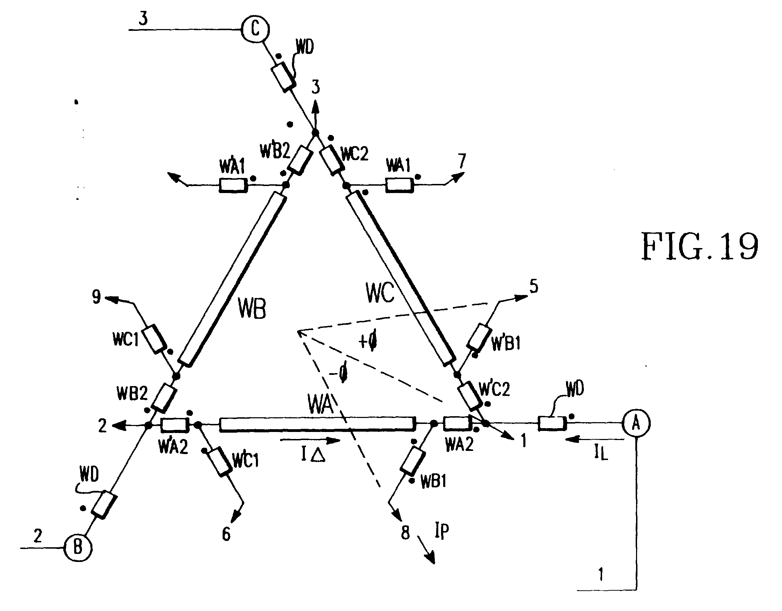

Figure 19 shows an alternative arrangement for the winding system of Figure 14, regarding the pairs of windings creating a 40° phase shift in either direction (W'C2, W'B1 and WB1, WA2 for tapping 1; W'A2, W'C1 and WC1, WB2 for tapping 2; or W'B2, W'A1 and WA1, WC2 for tapping 3). Windings WA2 and W'A2 which are closest to the main winding WA, to which they are coupled from either end, are now inserted between a corresponding end of WA and the associated apex of the main triangle. The same is done for WB2 and W'B2 regarding main winding WB, and also for WC2 and W'C2 regarding main winding WC. The complementary winding of each pair, thus the one (WB1 and W'B1 for apex H, or WC1 and W'C1 for apex G, or WA1 and W'A1 for apex I) which is remote from the main winding (WB, WC, or WA) to which it is coupled, is branched to the nodal point between the adjacent main winding (WA and WC for apex H, WB and WA for apex G and WC and WB for apex I), and the inserted winding (WA2 with WA for WB1, W'C2 with WC for W'B1; W'A2 with WA for W'C1, WB2 with WB for WC1, etc.). For more generalization, the embodiment of Figure 19 also shows a winding WD being inserted on each apex of the triangle with the respective AC lines 1, 2, 3.

## Claims

1. A static converter system operating between three AC buses and two DC buses comprising three rectifier bridges connected in parallel to said DC buses, each rectifier bridge having three AC lines connected to the middle point of two rectifier devices in series between the two DC buses, the AC lines of one rectifier bridge being directly connected to said AC buses, an autotransformer being interposed between said AC buses and in relationship with the respective AC lines of two of the three rectifier bridges, and the rectifier devices of said rectifier bridges being controlled for conduction for 40 electrical degrees so that the system is a converter of at least 18 pulses, characterised in that said autotransformer has three double pairs of adjacent windings, each pair of windings being symmetrically disposed about the apex of an equilateral triangle, one end of each of the three double pairs of windings being connected to one of the three said rectifier bridges, the other end of each double pair of windings being connected to a second of the said rectifier bridges and the midpoint of each double pair being connected to the third of said rectifier bridges, and in that said autotransformer has three main windings coupled to said double pairs of windings and is connected between said apexes, said one end and said other end of each double pair of windings being + 40 and - 40 degree phase shift in relation to its associated apex.

2. A system according to claim 1, characterised by one winding of a pair being coupled with the main winding opposite to the associated apex, and the other winding of a pair being coupled with one of the main windings adjacent to said associated apex.

3. A system according to claim 1, characterised by filtering inductors being interposed on each of the AC lines.

4. A system according to claim 1, charterised by filtering inductors being interposed between each rectifier bridge and the DC buses so as to operate individually.

## Patentansprüche

1. Statisches Konvertersystem welches zwischen drei Wechselstrom(AC)-Bussen und zwei Gleichstrom(DC)-Bussen arbeitet, und zwar mit drei parallel zu den DC-Bussen geschalteten Gleichrichterbrücken, wobei jede Gleichrichterbrücke drei AC-Leitungen verbunden mit dem Mittelpunkt von zwei Gleichrichtervorrichtungen in Serie zwischen den zwei DC-Bussen aufweist, wobei die AC-Leitungen einer Gleichrichterbrücke direkt mit den AC-Bussen verbunden sind, und wobei ein Autotransformator zwischen den AC-Bussen angeordnet ist und zwar in Beziehung mit den entsprechenden AC-Leitungen von zwei der drei Gleichrichterbrücken, und wobei die Gleichrichtervorrichtungen der Gleichrichterbrücken zur Leitung für 40 elektrische Grade derart gesteuert werden, daß das System ein Konverter von mindestens 18 Impulsen ist,
dadurch gekennzeichnet, daß der Autotransformator drei Doppelpaare benachbarter Wicklungen aufweist, wobei jedes Paar von Wicklungen symmetrisch um den Scheitel eines gleichseitigen Dreiecks angeordnet ist, wobei ein Ende jeder der drei Doppelpaare von Windungen oder Wicklungen mit einer der drei Gleichrichterbrücken verbunden ist, während das andere Ende jedes Doppelpaares von Wicklungen mit einer zweiten der erwähnten Gleichrichterbrücken verbunden ist und wobei ferner der Mittelpunkt jedes Doppelpaares mit der dritten der Gleichrichterbrücken verbunden ist, und ferner dadurch gekennzeichnet, daß der Autotransformator drei Hauptwicklungen aufweist und zwar gekoppelt mit den Doppelpaaren von Wicklungen und verbunden zwischen den Scheiteln, wobei das eine Ende und das andere Ende jeder der Doppelpaare von Wicklungen bezüglich des zugehörigen Scheitels plus 40 und minus 40 Grad Phasenverschiebung besitzt.

2. System nach Anspruch 1 dadurch gekennzeichnet, daß eine Wicklung eines Paares mit der Hauptwicklung entgegengesetzt zu dem zugehörigem Scheitel gekoppelt ist, und daß die andere Wicklung eines Paares mit einer der Hauptwicklungen, benachbart zu dem zugehörigem Scheitel, gekoppelt ist.

3. System nach Anspruch 1 gekennzeichnet durch Filterinduktivitäten angeordnet auf jeder der AC-Leitungen.

4. System nach Anspruch 1 dadurch gekennzeichnet, daß Filterinduktivitäten angeordnet sind zwischen jeder Gleichrichterbrücke und den DC-Bussen um so individuell zu arbeiten.

## Revendications

1. Un système de convertisseur statique fonctionnant entre trois bus de courant alternatif ou AC et deux bus de courant continu ou DC, comprenant trois ponts redresseurs connectés en parallèle auxdits bus de courant continu, chaque pont redresseur comprenant trois lignes de courant alternatif connectées au point médian de deux dispositifs redresseurs en série entre les deux bus de courant continu, les lignes de courant alternatif de l'un des ponts redresseurs étant connectées directement auxdits bus de courant alternatif, un autotransformateur étant interposé entre lesdits bus de courant alternatif et en relation avec les lignes de courant alternatif respectives de deux des trois ponts redresseurs, et les dispositifs redresseurs desdits ponts redresseurs étant commandés pour conduction pour 40 degrés électriques de façon que le système soit un convertisseur d'au moins 18 impulsions, caractérisé en ce que ledit autotransformateur comporte trois doubles paires d'enroulements adjacents, chaque paire d'enroulements étant disposée symétriquement autour du sommet d'un triangle équilatéral, une première extrémité de chacune des trois doubles paires d'enroulements étant connectée à un premier des desdits trois ponts redresseurs, l'autre extrémité de chaque double paire étant connectée à une deuxième desdits ponts redresseurs et le point médian de chaque double paire étant connecté au troisième desdits ponts redresseurs, et en ce que ledit autotransformateur comprend trois enroulements principaux couplés auxdites doubles paires d'enroulements et est connecté entre lesdits sommets, ladite première extrémité et ladite autre extrémité de chaque double paire d'enroulements étant déphasées de + 40 et - 40 degrés par rapport à son sommet associé.

2. Un système selon la revendication 1, caractérisé en ce qu'un enroulement d'une paire est couplé à l' enroulement principal opposé du sommet associé, et l'autre enroulement d'une paire est couplé à l'un des enroulements principaux adjacents audit sommet associé.

3. Un système selon la revendication 1, caractérisé en ce que des inducteurs de filtrage sont interposés sur chacune des lignes de courant alternatif.

4. Un système selon la revendication 1, caractérisé en ce que des inducteurs de filtrage sont interposés entre chaque pont redresseur et les bus de courant continu de façon à fonctionner individuellement.
